# EUROPÄISCHE PATENTANMELDUNG

(11) **EP 4 645 657 A1**
(43) Veröffentlichungstag der Anmeldung: **05.11.2025**
(21) Anmeldenummer: 24173757.6
(22) Anmeldetag: 02.05.2024
(51) Int. Cl.: H02K 15/02, H02K 15/12, H02K 1/24

(54) **RELUKTANZLÄUFER**

(71) Anmelder: Innomotics GmbH, 90441 Nürnberg (DE)
(72) Erfinder: Büttner, Klaus, 97618 Hollstadt (DE); Katzenberger, Tobias, 97631 Bad Königshofen STT Untereßfeld (DE); Kirchner, Klaus, 97645 Ostheim (DE); Warmuth, Matthias, 97618 Windshausen (DE)
(74) Vertreter: Siemens Patent Attorneys

(57) **Zusammenfassung**

Die Erfindung betrifft ein Verfahren zur Herstellung eines Reluktanzläufers (4) mit magnetisch leitenden Flusspfaden (22) und Flusssperren (11), durch zumindest folgende Schritte:
- Stanzen von Blechen (5) des Reluktanzläufers (4),
- Positionieren, insbesondere Aufpressen der einzelnen Bleche (5) auf eine Welle (8), um ein Blechpaket (6) des Reluktanzläufers (4) zu bilden,
- Rolltauchen des Blechpakets (6) des Reluktanzläufers (4), indem ein Eintauchen des Blechpakets (6) unter Rotation in ein Harzbad (14) mit vorgegebener Eintauchtiefe (15) und Verweildauer durchgeführt wird.

## Beschreibung

Die Erfindung betrifft einen Reluktanzläufer einer dynamoelektrischen Maschine, insbesondere einer synchronen Reluktanzmaschine, ein Verfahren zur Herstellung des Reluktanzläufers, als auch die Anwendung eines Reluktanzläufers in einer dynamoelektrischen Maschine, insbesondere einer synchronen Reluktanzmaschine und die Anwendung einer derartigen elektrischen Maschine u.a. im Werkzeugmaschinenbau und in der Fahrzeugtechnik.

Reluktanzläufer sind in ihrem grundsätzlichen Aufbau mit magnetischen Flussleitpfaden und Flusssperren ausgeführt. Damit werden die erforderlichen Induktivitätsunterschiede im Reluktanzläufer erreicht, die zu einer dementsprechenden Drehmomentausbeute einer synchronen Reluktanzmaschine führen.

Diese in Umfangsrichtung betrachtet abwechselnd aufweisenden magnetischen Vorzugsrichtungen (d-Richtung) und Richtungen, die einen magnetisch hohen Widerstand aufweisen (q-Richtungen), bilden damit die magnetischen d- und q-Achsen des Reluktanzläufers.

Zur Ausbildung der Flusssperren werden im Blechpaket des Reluktanzläufers Aussparungen vorgesehen, die aber zu einer Schwächung der mechanischen Stabilität des Blechpakets des Reluktanzläufers führen, so dass der Reluktanzläufer nicht für die gewünschten hohen Drehzahlen, vor allem nicht für Drehzahlen größer 40 m/s Umfangsgeschwindigkeit am Außendurchmesser des Reluktanzläufers geeignet ist. Um dementsprechende Drehzahlen zu erreichen, müsste die mechanische Stabilisierung verbessert werden, was aber letztlich u.a. zu einer Verstärkung der Streustege im Bereich der Flusssperren führt, die die Effizienz einer synchronen Reluktanzmaschine reduzieren.

In der Reluktanztechnik wird das Rotorblechpaket normalerweise durch Aufpressen einzelner Rotorbleche auf eine Welle gebildet. Somit sind die Rotorbleche durch Aufpressen auf die Welle mit einer Presspassung im Bereich der Achsbohrung axial fixiert, jedoch nicht im radial äußeren Bereich des Blechpakets. Dort kommt es im Betrieb der Reluktanzmaschine zu einem Auffächern der Rotorbleche in axialer Richtung. Je nach axialer Länge des Rotorpakets liegt diese Auffächerung im Bereich von 2 - 10 mm. Dies führt im Betrieb der Reluktanzmaschine zu unerwünschten Schwingungen des Reluktanzläufers, was sich dann letztendlich in der Bearbeitungsqualität der angetriebenen Arbeitsmaschine beeinträchtigt.

Des Weiteren wird die Schwingungsanfälligkeit der Reluktanzmaschinen auch dadurch begünstigt, dass der magnetische Fluss direkt ohne Dämpfung des Stators über einen Luftspalt in den Läufer geführt wird. Aufgrund bestehender Leistungsanforderungen an Reluktanzmaschinen wird dort der Luftspalt zwischen Stator und Läufer geringer ausgeführt als bei einem Asynchronmotor, womit die drehmomentbildenden Kräfte und damit aber auch die Schwingungsanfälligkeit wesentlich stärker ausgeprägt ist.

Demnach ist die Empfindlichkeit gegenüber Unsymmetrien, z. B. in der Konzentrizität, in der Reluktanztechnik erheblich höher. Dies macht sich in einer unvorteilhaften höheren Schwingungs- und Geräuschneigung z. B. eines synchronen Reluktanzmotors bemerkbar.

Um nunmehr die Schwingungsneigung zu reduzieren, ist es bekannt, ein nicht-ferromagnetisches Material, wie Aluminium, in die Flusssperren einzusetzen. Zusätzlich werden gegebenenfalls noch axiale Zwischenlagen in das Blechpaket parallel zu den jeweiligen Blechen eingebaut, die die mechanische Stabilisierung in Kombination mit dieser Aluminiumvergussmasse unterstützen sollen. Dies führt aber lediglich zu einer Erhöhung der bewegten Massen, die aber zur Drehmomentenbildung des Reluktanzmotors nichts beitragen.

Eine weitere Möglichkeit zur Reduzierung der Schwingungsneigung besteht in der Erhöhung des Motorgewichts durch massive Schwerbauweise von Motorkomponenten wie den Lagerschilden oder dem Gehäuse, um zumindest die erste Eigenfrequenz der synchronen Reluktanzmaschine hin zu höheren Frequenzen bzw. Drehzahlen zu verschieben.

Bei Reluktanzmaschinen wird bekanntermaßen von einem Stator ein magnetisches Wechselfeld erzeugt, durch welches ein Rotor im Wesentlichen infolge der Reluktanzkraft angetrieben wird. Sowohl der Rotor als auch der Stator weisen hierbei üblicherweise Pakete aus axial geschichteten Blechen auf. Die Bleche bestehen aus Material mit hoher magnetischer Permeabilität, z. B. Elektroblech. Jedes Blech ist in sich strukturiert und weist eine Anzahl von Aussparungen auf, die dazu dienen, den Verlauf des Magnetfelds zu beeinflussen. Die Aussparungen werden als nicht-magnetflussleitende Bereiche bezeichnet, während die Bleche magnetflussleitende Bereiche ausbilden.

Der Rotor muss somit neben elektromagnetischen Eigenschaften auch bestimmte mechanische Eigenschaften aufweisen. So können Teile des Rotors drehzahlabhängig erheblichen Fliehkräften ausgesetzt sein. Da man somit bei den gestanzten Blechen auch immer die strukturelle Integrität des Rotors zu beachten hat, müssen die flussführenden Bereiche und die nicht flussführenden Bereich eine Mindestgröße haben. Im Betrieb einer Reluktanzmaschine ist deshalb eine Stabilisierung des Reluktanzläufers notwendig, insbesondere eine Vermeidung der Schwingungen.

Um diese Schwingungsanfälligkeit zu reduzieren, ist es auch bekannt an den Stirnseiten des Blechpakets eines Reluktanzläufers Aluminium-Endscheiben zu platzieren, die unter axialer Vorspannung auf beiden Seiten des Blechpakets aufgepresst werden. Diese Scheiben sollten aus Aluminium sein, um negative magnetischen Einflüsse des Stators zu vermeiden. Da diese Scheiben jedoch bei Erwärmung im Betrieb eine im Verhältnis zur Stahlwelle doppelte Wärmausdehnung haben und somit sich die Endscheiben von der Welle lösen können, werden zusätzlich zur sicheren axialen Fixierung, Stahlhülsen im inneren Bereich aufgepresst.

Um eine Stabilisierung des Reluktanzläufers zu erhalten, ist aus der EP 17 752 069 A1 bekannt, die Flusssperren des Reluktanzläufers zumindest teilweise mit PU-Schaum ausschäumen.

Nachteilig bei den vorgestellten Lösungen der Stabilisierung des Reluktanzläufers ist, dass diese Lösungsmöglichkeiten aufwändig sind, oder die Vorteile der Reluktanztechnik vermindern.

Ausgehend davon liegt der Erfindung die Aufgabe zugrunde, ein einfaches Herstellverfahren eines Reluktanzläufers bereitzustellen, der die oben erwähnten Nachteile vermeidet und bei vergleichsweise hohem Wirkungsgrad und unterschiedlichen Drehmomentverhalten im Betrieb einer Reluktanzmaschine weniger schwingungsanfällig ist. Des Weiteren soll insbesondere für hochtourige Anwendungen u. a. in der Werkzeugmaschinentechnik, Fluidtechnik oder Kraftfahrzeugtechnik ein geeigneter Antrieb bereitgestellt werden.

Die Lösung der gestellten Aufgabe gelingt durch die Merkmalskombinationen der unabhängigen Ansprüche.

Vorteilhafte Ausgestaltungen sind den abhängigen Ansprüchen zu entnehmen.

Bei dem erfindungsgemäßen Verfahren zur Herstellung eines Reluktanzläufers mittels Rolltauchen werden zumindest folgende Schritte vollzogen:
Zunächst wird ein Blechpaket des Reluktanzläufers paketiert. Dabei wird das Blechpaket oder das aus Teilblechpaketen gebildete Blechpaket drehfest auf einer Welle angeordnet.

Die geschieht aus Einzelblechen oder aus ggf. vorpaketierten Teilblechpaketen, die jeweils ebenfalls aus Einzelblechen gebildet wurden. Die Teilblechpakete können, umfänglich betrachtet, um einen vorgebbaren Winkel zum vorigen Teilblechpaket auf einer Welle versetzt angeordnet werden.

Die Blechpaketierung des gesamten Blechpakets und/oder der Teilblechpakete erfolgt mittels Schweißung, Verklebung (Punktverklebung oder nahezu vollflächige Verklebung) der jeweiligen Einzelbleche oder Stanzpaketierung der Einzelbleche. Eine Paketierung kann auch durch mindestens ein axiales Verspann-Element im inneren Bereich des Blechpakets erfolgen. Idealerweise ist dieses Verspann-Element wieder entfernbar, so dass es als ein im Fertigungsprozess wiederverwendbares Element eingesetzt werden kann.

Ausstanzungen der einzelnen Bleche bilden, in einem Blechpaket paketiert, die im Wesentlichen axial verlaufenden Ausnehmungen. Die Ausnehmungen des Blechpakets verlaufen dabei entweder achsparallel, geschrägt oder gestaffelt. Die Ausnehmungen sind dabei die Flusssperren. Weitere Ausstanzungen können Zugankerbohrungen, Trägheitsöffnungen etc. sein.

Bei einer achsparallelen Anordnung fluchten die Ausnehmungen. Bei einer geschrägten Anordnung ist jedes Blech gegenüber dem axial nachfolgenden Blech um einen vorgebbaren Winkel umfänglich versetzt angeordnet. Umfänglich versetzt, axial angeordnete Teilblechpakete bilden ein gestaffeltes Blechpaket.

Das Blechpaket oder Teilblechpaket des Reluktanzläufers wird vorzugsweise unter einer vorgegebenen Rotation in ein vorzugsweise einkomponentiges Harzbad (1K) eingetaucht, so dass sich das Harz -in Abhängigkeit von der Eintauchtiefe - gleichmäßig in die Klebespalte zwischen den Einzelblechen am radial äußeren Rand des Blechpakets verteilt. Das einkomponentige Harzbad besteht dabei nur aus Harz ohne Härter. Eine Aushärtung ist somit nur mit thermischer Unterstützung, vorzugsweise in einem Ofen mit vergleichsweise hohen Temperaturen im Bereich von 120 °C möglich.

Dieses Rolltauchverfahren dient dazu, die radial äußeren Bereiche des Blechpakets gleichmäßig zu verkleben.

Nach einer vorgegebenen Rollierzeit wird das Blechpaket des Reluktanzläufers oder das Teilblechpaket aus dem Harzbad herausgenommen, wobei die Rotation - optional - weiterhin mit gleicher oder anderer Drehzahl eine vorgegebene Zeit auch außerhalb des Harzbades erfolgen kann, bis das überschüssige Harz abgetropft ist und der Gelierprozess abgeschlossen ist.

Optional können die Teilblechpakete auch mittels einer Hilfswelle das erfindungsgemäße Rolltauchverfahren zunächst durchlaufen und erst danach axial hintereinander, insbesondere um einen vorgebbaren Winkel umfänglich versetzt auf der Welle drehfest positioniert werden.

Somit kapilliert das Harz bzw. der Kleber im Wesentlichen nur im eingetauchten Bereich zwischen die Einzelbleche und verklebt diese auch in diesem Bereich. Durch diese gezielte Verklebung ist dann im Betrieb der dynamoelektrischen Maschine keine Aufspreizung bzw. Auffächerung der radial äußeren Bereiche der Einzelbleche des Reluktanzläufers mehr möglich.

Ausgenommen von der Füllung durch den Kleber sind die radial weiter innenliegenden Flusssperrenabschnitte, und ev. Trägheitsausnehmungen und/oder Zugankerbohrungen im Blechpaket.

Die Eintauchtiefe ist so bemessen, dass nur der äußere Bereich der Flusssperren mit Harz beaufschlagt wird, so dass sich das Harz in diesem Bereich auch axial entlang des Blechpakets ausbreiten kann und sich somit auch eine Kapillarwirkung von innen nach außen einstellen kann. Eine Auffächerung der Einzelbleche im Betrieb der Reluktanzmaschine wirkt diese Verklebung der Einzelbleche im Außenbereich entgegen.

Durch dies oben beschriebene Kapillarwirkung in den - vor allem radial äußeren - Zwischenräumen der Einzelbleche werden diese im Bereich, der mit Harz beaufschlagen Flächen, verklebt.

Der Bereich der Klebung beträgt ca. 10 % des Außendurchmessers des Reluktanzläufers. Damit ist die Menge des erforderlichen Klebers optimiert und die Bleche werden radial innen durch Presspassung auf der Welle gehalten.

Der Bereich der Verspannelemente ist dabei vorzugsweise frei von Kleber, so dass die Verspannelemente wiederverwendbar bei nachfolgenden Reluktanzläufern eingesetzt werden können.

Die axiale Verspannung kann durch Einbringung von Verspannelementen in eigens dafür vorgesehene Ausstanzungen der Einzelbleche und/oder über die als Flusssperren vorhandenen Ausnehmungen erfolgen.

Erfindungsgemäß wird somit eine Verfestigung (axiale Verspannung) des Blechpakets des Reluktanzläufers geschaffen, der auch bei hohen Drehzahlen des Reluktanzläufers eine ausreihende Schwingungsstabilität aufweist, ohne auf Aluminiumscheiben und zusätzliche Stahlscheiben angewiesen zu sein.

Alternativ dazu kann das Verspann-Element auch am Rotor verbleiben, was den Fertigungsprozess beschleunigt.

In einer weiteren Ausführung erfolgt das Rolltauchen im nicht verspannten Zustand des Blechpakets, die Einzelbleche sind lediglich axial gestapelt. Danach wird das Blechpaket aus dem Harzbad herausgefahren und es können an den Stirnseiten Endscheiben angedrückt werden.

Durch an den Endscheiben angebrachte dübelartige Nocken, die sich axial im Blechpaket über die Flusssperren oder andere Ausstanzungen verankern, werden die Endscheiben fest fixiert und auch die Bleche axial verspannt gehalten. Das Harz dringt also zunächst über die Spalte aufgrund einer vorgegebenen Eintauchtiefe im Rollbad ein. Das anschließende axiale Pressen verstärkt die Klebung der Einzelblechen in diesen axialen Bereichen.

Nach dem Aushärten des Harzes sind die Endscheiben über ihre Nocken im ausgehärteten Harz dann sicher am Blechpaket fixiert.

Die Endscheiben können zusätzlich mit Lüfterflügeln ausgestattet werden, um die Kühlung im Motorinnenraum zu verbessern.

Die radiale Erstreckung der Endscheiben erfolgt vorzugsweise im radial äußeren Bereich der Stirnseite des Blechpakets, ohne aber über den Radius des Blechpakets zur ragen.

Auch für bereits durch Stanzpaketierung verfestigte Blechpakete kann diese Technik zusätzlich Anwendung finden, um eine sichere Verfestigung des Blechpakets, auch bei rauen Umgebungsbedingungen, insbesondere bei Schwingungs- und Schockbelastungen, zu erhalten.

In einer weiteren Ausführung wird zusätzlich eine Bandage aus verstärkenden Fasern auf die oben genannten Ausführungen aufgebracht, um eine weitere Erhöhung in der Drehzahltauglichkeit zu erreichen.

Dieses Ummanteln des Blechpakets durch eine Bandage kann vor dem Rolltauchen, während des Rolltauchens oder im Anschluss im nassen Zustand erfolgen.

Durch diese erfindungsgemäße Verfestigung des Blechpakets eines Reluktanzläufes wird eine kostengünstige Verspann-Möglichkeit geschaffen, die schwingungstechnisch Vorteile bietet und die Einsparung von Bauteilen und Ressourcen bietet.

Wichtige Parameter des Rolltauchens sind dabei:
Die Viskosität des Harzes, die bis 2000 mPas vorzugsweise im Bereich von 100 bis 500 mPas liegt. Des Weiteren die Rolliergeschwindigkeit im und außerhalb des Harzbades, die bei ca. 20U/min liegt. Bei der Eintauchtiefe im Harzbad sollten zumindest die radial äußeren Aussparungen komplett eingetaucht sein. Die Tauchzeit im Harzbad liegt in Abhängigkeit von der Viskosität im Bereich von 2 min. Die Gelierzeit ist abhängig von den thermischen Maßnahmen. Die Objekttemperatur liegt zur Beschleunigung des Prozesses bzw. der Gelierzeit im Bereich von 40 bis 60 °C. Die Harzbadtemperatur beträgt bis zu 40 °C.

Zur Beschleunigung des Aushärtens im Anschluss an das Rolltauchen des Blechpakets des Reluktanzläufers kann dieses einem thermischen Prozess unterzogen werden.

Die maximale Eintauchtiefe des Blechpakets in das Harzbad orientiert sich daran, dass das Klebesystem mit seiner gegebenen Viskosität axial in das Blechpaket fließen kann. Damit sind die Flusssperren im äußeren Bereich ausreichend eingetaucht.

Die dementsprechend minimale Eintauchtiefe des Blechpakets im Harzbad liegt im Bereich 3 - 10 mm radial innerhalb des äußersten Bereichs einer Ausnehmung, also z. B. einer Flusssperre, um nur im erforderlichen Bereich des Blechpakets eine Beaufschlagung mit Harz zu erzielen.

Die Viskosität des Harzes liegt vorzugsweise im Bereich bis zu 2000 mPas, vorzugsweise von 100 - 500 mPas, da dort - wie Versuche gezeigt haben - die besten Ergebnisse erzielt wurden.

Diese Verklebung kann somit sowohl für vorgefertigte Teilpakete, die erst nach dem Verkleben auf einer Welle positioniert werden, als auch für das gesamte Blechpaket, das bereits auf die Rotorwelle gefügt ist, angewendet werden.

Eine Bandagierung erfolgt nur bei einem kompletten Blechpaket nicht bei einzelnen "rollgetauchten" Teilblechpaketen.

Um das Verfahren zu beschleunigen kann das Aushärten des Klebers/Harzes im Blechpaket im Anschluss an das Rolltauchen in einem Ofen oder bereits während der Gelierphase mittels Wärmestrahlung oder Induktionserwärmung erfolgen.

Um die Kapillarwirkung vor allem in den vorgegebenen radialen Bereichen der Bleche noch zu steigern bzw. zu beschleunigen, kann das Blechpaket oder Teilblechpaket während des Rolltauchens in axiale und/oder umfängliche Schwingungen im Bereich von 100 bis 500 Hz versetzt werden.

Eine Temperierung der Blechpakete und oder des Harzbades kann zur zusätzlichen Optimierung des Klebeprozesses angewandt werden.

Am Ende des Rolltauchvorganges (das Blechpaket des Reluktanzläufers wird aus Harzbad herausgefahren) kann bei Bedarf ein Abstreifen am Außenumfang des Blechpakets oder Teilblechpakets erfolgen, um eine möglichst dünne Schicht an der Oberfläche zu erhalten, die den Luftspalt der dynamoelektrischen Maschine nicht beeinträchtigt. Danach folgt der Gelierprozess.

Ein erfindungsgemäß hergestellter Reluktanzläufer minimiert die Gefahr einer Rissbildung in der Verklebung während der Rotormontage, vor allem wenn das Blechpaket bzw. die Teilblechpakete bereits vor dem Klebevorgang auf die Welle aufgepresst werden.

Durch die Teilblechpakete des Rotors ist - axial betrachtet - eine Staffelung der d- und q-Achsen des Reluktanzläufers möglich, was u. a. die Drehmomentwelligkeit einer Synchronmaschine reduziert.

Dadurch, dass die Bleche des Blechpakets des Rotors vor allem im Außenbereich, also dem Luftspalt zugewandten Bereich, zusätzlich miteinander verklebt, werden Schwingungen des Reluktanzläufers im Betrieb der Synchronmaschine reduziert.

Dies ist besonders vorteilhaft bei den dabei angedachten Anwendungen der permanenterregten Synchronmaschine, wie z. B. bei Kompressoren, Lüfter, Verdichter, Pumpen etc.

Die Erfindung sowie weitere vorteilhafte Ausgestaltungen der Erfindung werden anhand prinzipiell dargestellter Ausführungsbeispiele näher erläutert, darin zeigen:
- FIG 1: prinzipieller Längsschnitt einer dynamoelektrischen Maschine,
- FIG 2 und 3: Ansichten eines Reluktanzläufers im Harzbad,
- FIG 4: Reluktanzläufer mit verklebtem Randbereich,
- FIG 5 und 6: Reluktanzläufer mit verklebtem Randbereich und Zugankerverbindungen,
- FIG 7: Reluktanzläufer ohne axiale Vorspannung,
- FIG 8: Reluktanzläufer mit dübelbehafteten Endscheiben.

Es sei angemerkt, dass sich Begriffe wie "axial", "radial", "tangential" etc. auf die in der jeweiligen Figur bzw. im jeweils beschriebenen Beispiel zum Einsatz kommende Achse 7 beziehen. Mit anderen Worten beziehen sich die Richtungen axial, radial, tangential stets auf eine Achse 7 des Rotors 5 und damit auf die entsprechende Symmetrieachse des Stators 2. Dabei beschreibt "axial" eine Richtung parallel zur Achse 7, "radial" beschreibt eine Richtung orthogonal zur Achse 7, auf diese zu oder auch von ihr weg, und "tangential" ist eine Richtung, die in konstantem radialem Abstand zur Achse 7 und bei konstanter Axialposition kreisförmig um die Achse 7 herum gerichtet ist. Der Ausdruck "in Umfangsrichtung" ist mit "tangential" gleichzusetzen.

In Bezug auf eine Fläche, bspw. eine Querschnittsfläche, beschreiben die Begriffe "axial", "radial", "tangential" etc. die Orientierung des Normalenvektors der Fläche, d. h. desjenigen Vektors, der senkrecht auf der betroffenen Fläche steht.

Unter dem Ausdruck "koaxiale Bauteile", bspw. koaxiale Komponenten wie Rotor 5 und Stator 2, werden hier Bauteile verstanden, die gleiche Normalenvektoren aufweisen, für die also die von den koaxialen Bauteilen definierten Ebenen parallel zueinander sind. Des Weiteren soll der Ausdruck beinhalten, dass die Mittelpunkte koaxialer Bauteile auf der gleichen Rotations- bzw. Symmetrieachse liegen. Diese Mittelpunkte können jedoch auf dieser Achse 7 ggf. an verschiedenen axialen Positionen liegen und die genannten Ebenen also einen Abstand >0 voneinander haben. Der Ausdruck verlangt nicht zwangsläufig, dass koaxiale Bauteile den gleichen Radius haben.

Der Begriff "komplementär" meint im Zusammenhang mit zwei Komponenten, welche "komplementär" zueinander sind, dass ihre äußeren Formen derart ausgestaltet sind, dass die eine Komponente vorzugsweise vollständig in der zu ihr komplementären Komponente angeordnet werden kann, so dass sich die innere Oberfläche der einen Komponente und die äußere Oberfläche der anderen Komponente idealerweise lückenlos bzw. vollflächig berühren. Konsequenterweise ist also im Falle von zwei zueinander komplementären Gegenständen die äußere Form des einen Gegenstandes durch die äußere Form des anderen Gegenstandes festgelegt. Der Begriff "komplementär" könnte durch den Begriff "invers" ersetzt werden.

Der Übersichtlichkeit wegen werden in den Figuren teilweise in den Fällen, in denen Bauteile mehrfach vorhanden sind, häufig nicht sämtliche dargestellten Bauteile mit Bezugszeichen versehen.

Die beschriebenen Ausführungen im allgemeinen Beschreibungsteil, als auch in der Figurenbeschreibung können nahezu beliebig kombiniert werden. Ebenso sind auch Einzelmerkmale der jeweiligen Ausführungen kombinierbar, ohne das Wesen der Erfindung zu verlassen.

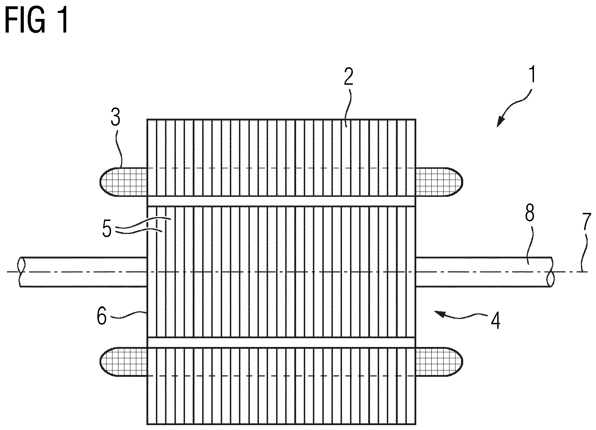

FIG 1 zeigt in einer prinzipiellen Längsdarstellung eine dynamoelektrische Maschine, die ein Stator 2 aufweist, das in nicht näher dargestellten Nuten ein Wicklungssystem aufweist. Dieses Wicklungssystem bildet an den Stirnseiten des Stators 2 jeweils eine Wickelkopf 3 aus. Ein als Reluktanzläufer 4 ausgebildeter Rotor, der in axialer Richtung aus Einzelblechen 5 aufgebaut ist, ist drehfest mit einer Welle 8 verbunden und somit um eine Achse 7 drehbar ausgeführt. Durch elektromagnetische Wechselwirkung über einen Luftspalt 15 wird durch ein bestromtes Wicklungssystem des Stators 2 der Reluktanzläufer 4 in Rotation um eine Achse 7 versetzt. Andere Komponenten, wie Gehäuse, Lagerschilde, Lager, ev. Geber etc. sind nicht näher dargestellt.

Bei Reluktanzmaschinen wird bekanntermaßen von einem Stator 2 ein magnetisches Wechselfeld erzeugt, durch welches ein Rotor im Wesentlichen infolge der Reluktanzkraft angetrieben wird. Sowohl der Rotor als auch der Stator 2 weisen hierbei üblicherweise Pakete aus axial geschichteten Blechen auf, die voneinander vorzugsweise durch einseitige Lackschichten isoliert sind. Die Bleche bestehen aus Material mit hoher magnetischer Permeabilität, z. B. Elektroblech. Jedes Einzelblech 5 des Reluktanzläufers 4 ist in sich strukturiert und weist eine Anzahl von Aussparungen 12 auf, die dazu dienen, den Verlauf des Magnetfelds zu beeinflussen. Die Aussparungen 12 werden als nicht-flussführende oder nicht-magnetflussleitende Bereiche (Flusssperre 11) bezeichnet, während die Bleche 5 flussführende oder magnetflussleitende Bereiche 22 (Flussleitpfade 22) darstellen.

In der Reluktanztechnik wird der magnetische Fluss direkt ohne Dämpfung des Stators 2 über einen Luftspalt 9 in den Reluktanzläufer 4 geführt. Aufgrund der Wirkungsgrad- und Leistungsgradanforderungen wird der Luftspalt 9 zwischen Stator 2 und Reluktanzläufer 4 in seiner radialen Ausdehnung geringer ausgeführt als bei einem Asynchronmotor, womit die drehmomentbildenden Kräfte und damit auch die Schwingungsneigung wesentlich höher sind.

Reluktanzläufer 4 sind in ihrem grundsätzlichen Aufbau mit magnetischen Flussleitpfaden 22 und Flusssperren 11 ausgeführt. Damit werden die erforderlichen Induktivitätsunterschiede im Reluktanzläufer 4 erreicht, um eine dementsprechende Drehmomentausbeute einer synchronen Reluktanzmaschine zu erhalten.

Diese in Umfangsrichtung betrachtet abwechselnd aufweisenden magnetischen Vorzugsrichtungen (d-Richtung) und Richtungen, die einen magnetisch hohen Widerstand aufweisen (q-Richtungen), bilden damit die magnetischen d- und q-Achsen des Reluktanzläufers 4.

Ausstanzungen der einzelnen Bleche 5 bilden, in einem Blechpaket 6 paketiert, die im Wesentlichen axial verlaufenden Flusssperren 11. Die Flusssperren 11 des Blechpakets 6 verlaufen dabei entweder achsparallel, geschrägt oder gestaffelt.

Bei einer achsparallelen Anordnung fluchten die Flusssperren 11. Bei einer geschrägten Anordnung, ist jedes Blech 5 gegenüber dem axial nachfolgenden Blech 5 um einen vorgebbaren Winkel umfänglich versetzt angeordnet. Umfänglich versetzt, axial angeordnete Teilblechpakete bilden ein gestaffeltes Blechpaket 6.

Unabhängig von der Gestaltung des Blechpakets 6 (gerade, geschrägt, gestaffelt) ist immer, dass der Kleber 20 oder das Harz durch die Spalte zwischen den Einzelblechen 5 dringen bzw. kapellieren kann.

Ein Paketieren der Bleche 5 zu einem Blechpaket 6 oder zu einem Teilblechpaket kann für die Fertigung auch optional auf einer Hilfswelle erfolgen. Ebenso ist es möglich diese Bleche 5 zu verkleben. Ebenso ist Stanzpaketieren der Bleche 5 möglich, um ein Blechpaket 6 oder ein Teilblechpaket zu erhalten.

Das Blechpaket 6, wird vorzugsweise auf die Welle 8 zur Drehmomentenübertragung geschrumpft oder kalt gepresst.

Ebenso sind andere Möglichkeiten vorhanden, das Drehmoment vom Blechpaket 6 auf die Welle 8 zu übertragen, wie Passfederverbindungen etc. Eine Paketierung des Blechpakets 6 kann auch über achsparallele Zugankerverbindungen erfolgen.

Durch Aufpressen der Einzelbleche 5 auf die Welle 8 wird das Blechpaket 6 gebildet. Danach wird mindestens ein axiales Verspann-Element 17 an den Stirnseiten des Blechpakets 6 platziert.

Idealerweise ist dieses Verspann-Element 17 wieder entfernbar, so dass es als ein im Fertigungsprozess eines Reluktanzläufers 4 wiederverwendbares Element eingesetzt werden kann.

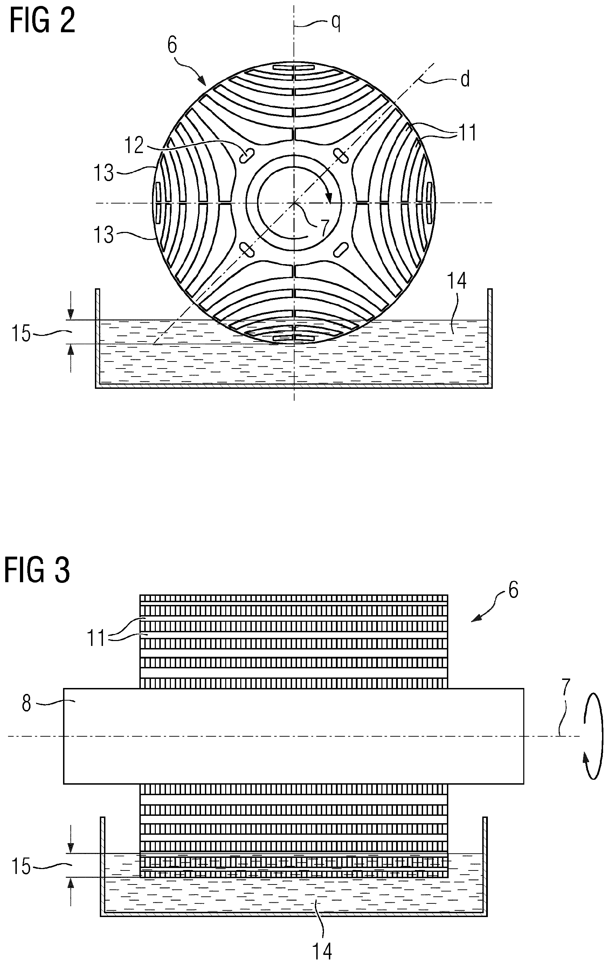

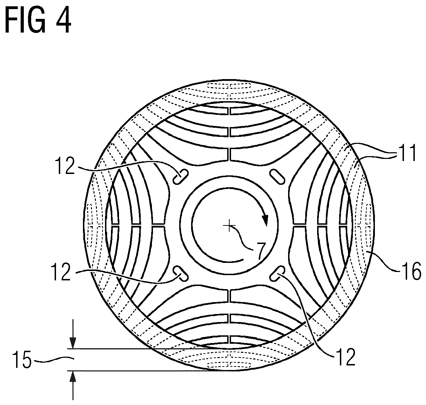

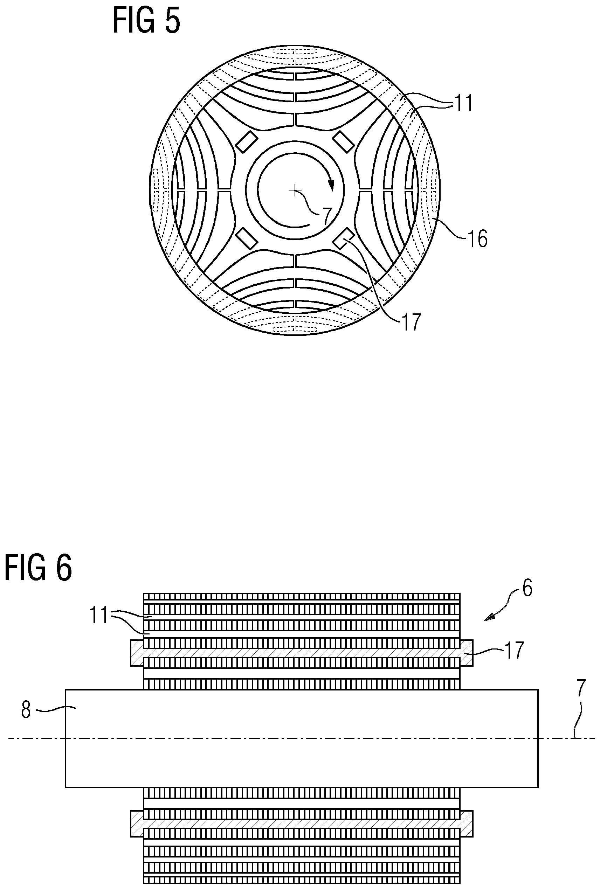

FIG 2, FIG 4, FIG 5 zeigen im Querschnitt je einen vier-poligen Reluktanzläufer 4 mit beispielhaft dargestellten Flusssperren 11. Zwischen den Flusssperren 11 sind die magnetischen Flussleitpfade 22 angeordnet, die zur Drehmomentbildung beitragen.

Zur Verbesserung der Stabilisierung ist es oft auch nötig, (z. B. radial verlaufende) Stege zwischen den flussführenden Bereichen zu belassen. Dies führt allerdings zu unerwünschten Streuflüssen, die die Effektivität der Maschine reduzieren.

In der dargestellten Ausführung sind in radialer Richtung zwei Flusssperren 5 gezeigt, es können jedoch auch drei, vier, fünf oder mehr Flusssperren 5 in radialer Richtung vorgesehen sein.

Ebenso ist die Erfindung bei zwei- vier- oder mehrpoligen Reluktanzläufern 4 einsetzbar.

Im Anschluss an das Paketieren wird das damit gebildete Blechpaket 6 unter Rotation mit einer bestimmten Eintauchtiefe 15 in ein einkomponentiges Harzbad 14 getaucht.

Die Eintauchtiefe 15 sollte derart bemessen sein, dass nur der äußere Bereich der Flusssperren mit Harz 20 beaufschlagt wird, so dass sich das Harz 20 in diesem Bereich auch axial entlang des Blechpakets 6 ausbreiten kann. Damit ergibt sich auch eine radial nach außen gerichteter Kapillierung des Harzes 20 in die Spalte zwischen den Einzelblechen 5.

Durch Kapillarwirkung in den Zwischenräumen der Einzelbleche 5 werden diese im radial äußeren Bereich, an den mit Harz 20 beaufschlagen Flächen, verklebt.

Der Bereich der Klebung sollte von außen bis zu einem Durchmesser (ca. 10 % vom Außendurchmesser) reichen.

Der Bereich der Verspann-Elemente 17 sollten frei von Kleber bzw. Harz 20 sein, so dass die Verspann-Elemente 17 wiederverwendbar eingesetzt werden können. In einer Ausführung verbleiben die Verspann-Elemente 17 am Reluktanzläufer 4.

Die axiale Verspannung des Blechpakets 6 kann durch Einbringung von Verspann-Elementen 17 in Ausstanzungen 12 oder Flusssperren 11 erfolgen.

In der Erfindung wird eine Verfestigung (axiale Verspannung) des Blechpakets 6 aufgezeigt, die ohne Aluminiumscheiben und zusätzliche Stahlscheiben, funktioniert.

In einer Ausführung erfolgt das Rolltauchen im nicht verspannten Zustand des Blechpakets 6, dabei sind die Einzelbleche 5 lediglich axial gestapelt. Danach wird das Blechpaket 6 aus dem Harzbad 14 herausgefahren und es können an den Stirnseiten - solange der Kleber 20 noch nicht geliert ist - Endscheiben 23 an der Stirnseite des Blechpakets 6 angedrückt werden, was zur Paketierung beiträgt.

Durch, an den Endscheiben 23 angebrachte dübelartige Nocken 18, die sich axial im Blechpaket 6 verankern, werden die Endscheiben 23 fest fixiert und somit auch die Einzelbleche 5 axial verspannt gehalten.

Nach dem Aushärten des Harzes 20 sind die Endscheiben 23 sicher am nunmehr paketierten Blechpaket 6 fixiert.

Die Endscheiben 23 können zusätzlich mit Lüfterflügeln 19 ausgestattet werden, um die Kühlung im Motorinnenraum im Betrieb einer Reluktanzmaschine zu verbessern.

Auch für bereits durch Stanzpaketierung axial paketierte bzw. verfestigte Blechpakete 6 kann können die Endscheiben 23 zusätzlich Anwendung finden, um eine sichere Verfestigung des Blechpakets 6, auch bei rauen Umgebungsbedingungen, insbesondere bei Schwingungs- und Schockbelastungen, zu erhalten.

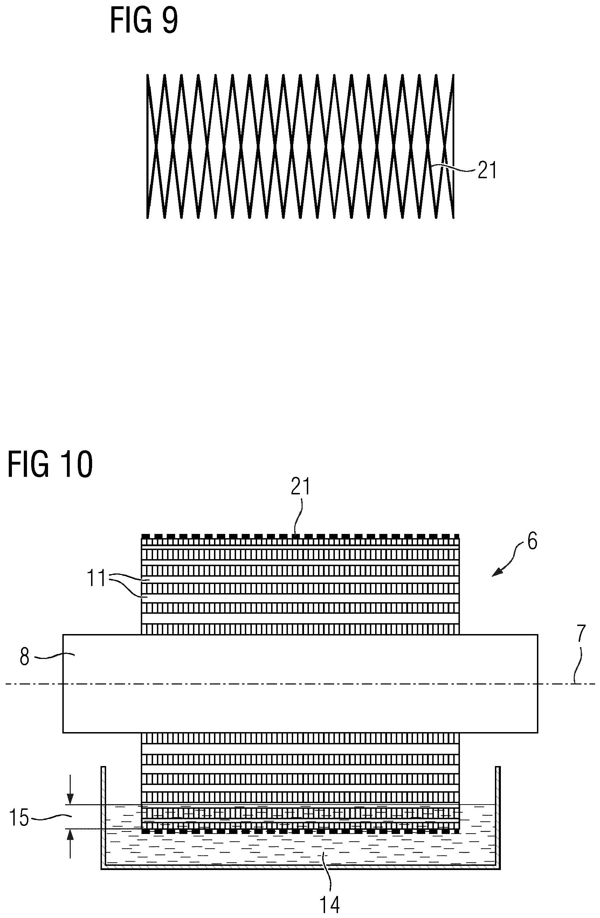

In einer weiteren Ausgestaltung der Erfindung wird eine Bandage 21 aus verstärkenden Fasern an der Oberfläche des Blechpakets 6 vorgesehen gemäß FIG 9 vorgesehen, um eine Erhöhung in der Drehzahltauglichkeit des Reluktanzläufers 4 zu erreichen. Die Maschenweite der Bandage 21 ist dabei so gewählt, dass der Klebeprozess unwesentlich beeinträchtigt wird, aber gleichzeitig eine wirksame Verfestigung des Blechpakets 6 vor allem bei höheren Drehzahlen bewirkt.

Diese Bandage 21 kann vor dem Rolltauchen um das Blechpakets 6 "gelegt" werden. Ebenso ist es möglich die Bandage 21 während des Rolltauchens oder im Anschluss an das Rolltauchen noch im "nassen Zustand" an der Oberfläche zu fixieren. Die zusätzliche Bandage 21 führt zu einer gesteigerten Verfestigung des Blechpakets 6 des Reluktanzläufers 4, ohne den Fertigungsaufwand unnötig zu verlängern.

Im Werkzeugmaschinenbau können derartige dynamoelektrische Maschine 1 eingesetzt werden, da aufgrund seiner geringen Trägheit des Reluktanzläufers 4 und der hohen Drehmomentausbeute dies für mehrere Anwendungen im Werkzeugmaschinenbau u.a. für schnelle kurze Bewegungshübe vorteilhaft ist.

Ebenso ist ein Antrieb mit einem derartigen Reluktanzläufers 4 bei Pumpen und Kompressoren aufgrund der vergleichsweise hohen Drehmomentausbeute einsetzbar. Auch dort führt eine derartige dynamoelektrische Maschine 1 mit einem erfindungsgemäßen Reluktanzläufers 4 zu einer verbesserten Geräuschdämpfung, reduzierter Schwingungsneigung des Antriebsstranges und höheren Drehzahlen.

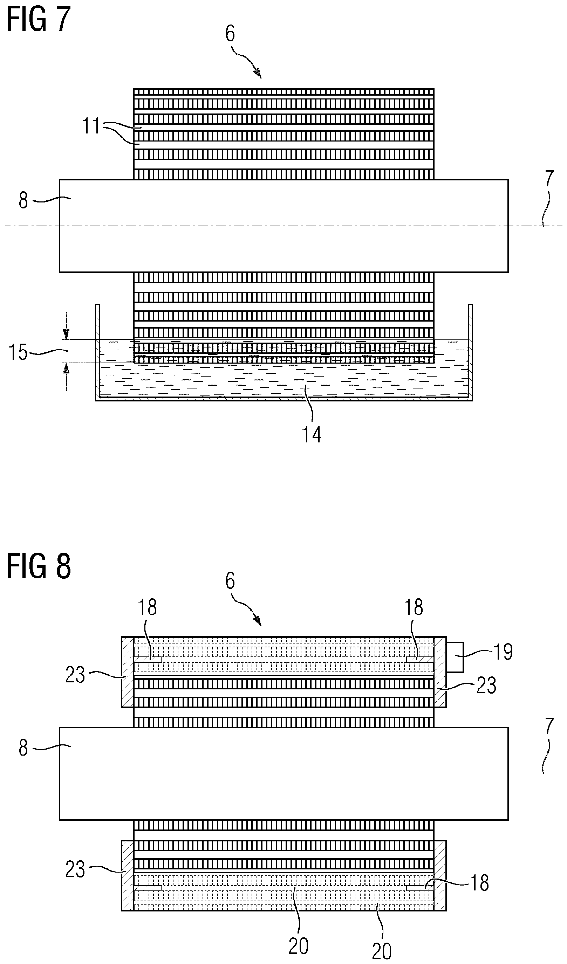

Der erfindungsgemäße Prozess des Rolltauchens - im Längsschnitt in den FIG 3, 6, 7, 8, 10 gezeigt - kann also nahezu bei Raumtemperatur erfolgen, was den Prozess vereinfacht und ein nahezu zeitlich nahtloses Weiterverarbeiten des Blechpakets 6 des Rotors ermöglicht.

Ev. Trägheitsöffnungen oder Aussparungen 12 für Zuganker werden nicht mit Harz 20 gefüllt.

Bei einem Verfahren zur Herstellung des Reluktanzläufers 4, insbesondere einer Reluktanz-Synchronmaschine 1, wird somit im Wesentlichen folgendermaßen vorgegangen.

Das Verfahren ist für alle Arten der Blech-Paketierung möglich, da die anschließende Beaufschlagung der vorgesehenen Bereiche des Blechpakets 6 mit Harz 20 überwiegend über die Spalte zwischen den Einzelblechen 5 und/oder die Flusssperren 11 erfolgt. Es werden somit zunächst Blechpakete 6 bzw. Teilblechpakete aus Einzelblechen 5 paketiert. Dabei werden diese Bleche 5, insbesondere stanzpaketiert. Das Blechpaket 6 bzw. Teilblechpaket kann aber ebenso geschweißte oder verklebte (als Punktverklebung benachbarter Einzelbleche) Bleche 5 aufweisen. Die im Wesentlichen axial verlaufenden Flusssperren 11 im Blechpaket 6 oder Teilblechpaket wurden vorab aus den Einzelblechen 5 gestanzt. Dabei weisen die Flusssperren 11, ev. Stege 13 zur weiteren Stabilisierung auf. Die paketierten oder zumindest gestapelten Blechpakete 6 oder Teilblechpakete werden auf einer Welle 8 oder Hilfswelle positioniert.

Die Blechpakete 6 bzw. Teilblechpakete werden mittels erfindungsgemäßem Rolltauchen dieser insbesondere rollierend um ihre Achse 7 in das Harzbad 14 gelassen. Die Viskosität des Harzes liegt vorzugsweise im Bereich bis zu 2000 mPas, vorzugsweise von 100 - 500 mPas. Die Blechpakete 6 bzw. Teilblechpakete können auch erst mit dem Rollieren im Harzbad 14 beginnen, wenn sie dort die angestrebte Eintauchtiefe 15 erreicht haben. Aufgrund der geringeren Viskosität verteilt sich der Kleber 20 in den Spalten zwischen den Einzelblechen 5.

Idealerweise ist die Eintauchtiefe 17 im Bereich von 3 - 10 mm radial innerhalb der Stege 13 der insbesondere äußeren Bereiche der Flusssperren 11, um nur im erforderlichen Bereich eine Beaufschlagung mit Harz 20 zu erzielen.

Dabei kapilliert das Harz 20 im eingetauchten Bereich zwischen die Einzelbleche 5 und verklebt diese. Das Rolltauchen wird bis zu einem gesättigten Zustand durchgeführt. Diese Sättigung stellt sich bezüglich des radialen Eindringverhaltens ein. Dies wird mittels der Viskosität des Harzes und/oder der Drehzahl (damit über die Fliehkräfte) eingestellt. Diese Betriebsparameter werden dabei so eingestellt, dass sich idealerweise nur in den radial äußeren Bereichen die angestrebte Verklebung einstellt, um damit auch den Verbrauch an Kleber bzw. Harz zu optimieren.

Um die Kapillarwirkung zwischen den Einzelblechen 5 vor allem im Bereich der Eintauchtiefe 15 und/oder im Bereich der Klebespalte zwischen den Einzelblechen 5 noch zu steigern bzw. zu beschleunigen, kann das Blechpaket 6 oder das Teilblechpaket während des Rolltauchens in axiale und/oder umfängliche Schwingungen versetzt werden.

Die maximale Eintauchtiefe richtet sich nach den nicht zu benetzenden Aussparungen 12 und Trägheitsöffnungen.

Nach einer vorgegebenen Zeit im Harzbad 14 werden die Blechpakete 6 bzw. Teilblechpakete aus dem Harzbad 14 herausgefahren. Die Rotation erfolgt weiterhin mit gleicher oder anderer Drehzahl auch außerhalb, bis das überschüssige Harz 20 abgetropft ist und der Gelierprozess abgeschlossen ist. Diese "andere" Drehzahl kann auch ein modulierendes Geschwindigkeitsprofil aufweisen.

Am Ende des Rolltauchens wird das Blechpaket 6 oder das Teilblechpaket aus dem Harzbad 14 herausgefahren und kann bei Bedarf auch - optional zusätzliches - Abstreifen am Außendurchmesser des Blechpakets 6 erfolgen, um eine möglichst dünne Schicht von Kleber 20 an der Oberfläche des Blechpakets 6 oder Teilblechpakets zu erhalten. Danach folgt der Gelierprozess. Dieses Abstreifen ist von Vorteil, da der Luftspalt 9 vergleichsweise gering ausgeführt ist und ggf. noch durch ein optionale Bandage 21 zusätzlich reduziert werden kann.

Im Anschluss kann das Blechpaket 6 bzw. Teilblechpakete des Rotors 4 zur Beschleunigung des Aushärtens auch einem zusätzlichen thermischen Prozess unterzogen werden.

Nachdem die Zuführung des Klebers 20 über die Kapillare zwischen den Einzelblechen 5 erfolgt, kann der umfängliche Versatz der Teilblechpakete - also eine Staffelung - vergleichsweise groß sein, da eine durchgängige axiale Zuführung des Klebers 20 über die Flusssperren 11 nicht unbedingt notwendig ist.

Durch Rotation des Blechpakets 6 während des Rolltauchens wird ein "Einfließen" von Kleber 20 in die radial tieferliegenden Abschnitte der jeweiligen Flusssperren 11 vermieden.

Grundsätzlich kann auch eine Temperierung des Harzes 20, der Blechpakete 6 oder Teilblechpakete etc. zur Optimierung des Klebeprozesses beitragen.

Das Aushärten des Klebers 20 kann im Anschluss auch in einem Ofen erfolgen oder bereits während der Gelierphase mittel Wärmestrahlung oder Induktionserwärmung.

Eine Synchronmaschine 1 mit einem erfindungsgemäßen Reluktanzläufer 4, dessen Bleche 5 mit dem erfindungsgemäßen Rollrauchverfahren fixiert sind, ist nunmehr vergleichsweise einfach herzustellen und erreicht einen vergleichsweise hohen Wirkungsgrad. Die Synchronmaschine 1 ist demnach für viele Arbeitsmaschinen, vor allem Maschinen im Dauerbetrieb auch unter wechselnden Belastungen, besonders geeignet. Diese fungieren beispielsweise als Antriebe von Kompressoren, Verdichtern, Lüftern und als Antriebe in der Nahrungsmittelindustrie und bei maritimen Anwendungen.

### Bezugszeichenliste

- 1: dynamoelektrische Maschine
- 2: Stator
- 3: Wickelkopf
- 4: Rotor
- 5: Bleche Rotor
- 6: Blechpaket
- 7: Achse
- 8: Welle
- 11: ausgestanzte Flusssperre
- 12: Aussparungen
- 13: Steg
- 14: Harzbad
- 15: Eintauchtiefe
- 16: Bereich der Verklebung
- 17: Spannelement
- 18: dübelartiges Spannelement
- 19: Lüfterflügel
- 20: Harz
- 21: Bandage
- 22: Flussleitpfad
- 23: Endscheibe

## Patentansprüche

1. Verfahren zur Herstellung eines Reluktanzläufers (4) mit magnetisch leitenden Flusspfaden (22) und Flusssperren (11), durch zumindest folgende Schritte:
- Stanzen von Blechen (5) des Reluktanzläufers (4),
- Positionieren, insbesondere Aufpressen der einzelnen Bleche (5) auf eine Welle (8), um ein Blechpaket (6) des Reluktanzläufers (4) zu bilden,
- Rolltauchen des Blechpakets (6) des Reluktanzläufers (4), indem ein Eintauchen des Blechpakets (6) unter Rotation in ein Harzbad (14) mit vorgegebener Eintauchtiefe (15) und Verweildauer durchgeführt wird.

2. Verfahren zur Herstellung eines Reluktanzläufers (4) nach Anspruch 1, **dadurch gekennzeichnet, dass** ein zumindest zeitweises Anbringen zumindest eines axialen Verspannelements (17) am Blechpaket (6) vor dem Rolltauchen erfolgt.

3. Verfahren zur Herstellung eines Reluktanzläufers (4) nach Anspruch 1 oder 2, **dadurch gekennzeichnet, dass** das Harzbad (14) ein einkomponentiges Harzbad ist.

4. Verfahren zur Herstellung eines Reluktanzläufers (4) nach einem der vorhergehenden Ansprüche, **dadurch gekennzeichnet, dass** der Bereich der axialen Verspannelemente (17) frei von Harz (20) bzw. Kleber ist.

5. Verfahren zur Herstellung eines Reluktanzläufers (4) nach einem der vorhergehenden Ansprüche, **dadurch gekennzeichnet, dass** die Verspannelemente als Zuganker oder Endscheiben (23) mit dübelartigen Nocken ausgeführt sind, die in Aussparungen (12) und/oder Flusssperren (11) axial eingreifen.

6. Verfahren zur Herstellung eines Reluktanzläufers (4) nach einem der vorhergehenden Ansprüche, **dadurch gekennzeichnet, dass** das Anbringen der axialen Verspann-elemente (17) in eigenen, vorzugsweise stirnseitigen Aussparungen (12) des Blechpakets (6) und/oder in einer oder mehreren Flusssperren (11) erfolgt.

7. Verfahren zur Herstellung eines Reluktanzläufers (4) nach einem der vorhergehenden Ansprüche, **dadurch gekennzeichnet, dass** das Blechpaket (6) des Reluktanzläufers (4) am Außenumfang vor dem Rolltauchen, während des Rolltauchens oder im Anschluss an das Rolltauchen außerhalb des Harzbades, mit einer Bandage (21) versehen wird.

8. Verfahren zur Herstellung eines Reluktanzläufers (4) nach einem der vorhergehenden Ansprüche, **dadurch gekennzeichnet, dass** das Blechpaket (6) des Reluktanzläufers (4) am radial äußeren Rand mit dem Harz (20) bzw. Kleber versehen wird, insbesondere mit einer radialen Dicke von ca. 10% des Radius des Blechpakets (6).

9. Verfahren zur Herstellung eines Reluktanzläufers (4) nach einem der vorhergehenden Ansprüche, **dadurch gekennzeichnet, dass** das Blechpaket (6) unter Rotation um seine Achse (7) in ein einkomponentiges Harzbad (14) eingetaucht wird , so dass sich das Harz bzw. Kleber (47) gleichmäßig in Klebespalte zwischen die Bleche (5) im radial äußeren Bereich des Blechpakets (6) verteilt, wobei danach wird der Reluktanzläufer (4) aus dem Harzbad (14) herausgefahren wird, wobei die Rotation weiterhin mit gleicher oder anderer Drehzahl eine vorgegebene Zeit auch außerhalb des Harzbades (14) erfolgt, bis das überschüssige Harz (20) abgetropft ist und der Gelierprozess abgeschlossen ist.

10. Verfahren zur Herstellung eines Reluktanzläufers (4) nach einem der vorhergehenden Ansprüche, **dadurch gekennzeichnet, dass** das Blechpaket (6) oder das Teilblechpaket während des Rolltauchens in axiale und/oder umfängliche Schwingungen versetzt wird, um die Kapillarwirkung, insbesondere zwischen den Einzelblechen (5) zu steigern bzw. zu beschleunigen.

11. Reluktanzläufer (4) hergestellt nach einem der vorherigen Ansprüche mit magnetisch leitenden Flusspfaden (22) und Flusssperren (11), wobei zumindest die Einzelbleche (5) vorzugsweise im radial äußeren Bereich (16) mit dem Harz (20) bzw. Kleber versehen sind.

12. Reluktanzläufer (4) nach Anspruch 11, **dadurch gekennzeichnet, dass** zumindest ein axiales Verspannelement (17) außerhalb des mit Kleber (20) versehenen Bereichs (16) angeordnet ist.

13. Dynamoelektrische Maschine (1) mit einem Reluktanzläufer (4) nach einem der Ansprüche 11 oder 12 mit magnetisch leitenden Flusspfaden (22) und Flusssperren (11), wobei die Einzelbleche (5) nur in einem radial äußeren Bereich (16) des Blechpakets (6) verklebt sind.

14. Werkzeugmaschinenantrieb oder Antrieb eines Fahrzeugs oder Antrieb eines Kompressors oder Antrieb einer Pumpe mit zumindest einer dynamoelektrischen Maschine nach Anspruch 13.
